# EUROPÄISCHE PATENTANMELDUNG

(11) **EP 2 423 115 A2**
(43) Veröffentlichungstag der Anmeldung: **29.02.2012**
(21) Anmeldenummer: 11177852.8
(22) Anmeldetag: 17.08.2011
(51) Int. Cl.: B65D 1/26, B65D 1/44, B65D 25/34, B65D 65/46, B65D 81/38, B29C 49/00, B29C 49/24, B29C 51/08, B29C 51/16

(54) **Verfahren zur Herstellung eines Verpackungsbehälters und Verpackungsbehälter**

(30) Priorität: 25.08.2010 DE 202010008366 U; 25.08.2010 DE 102010037168
(71) Anmelder: Paccor Deutschland GmbH, 56859 Alf (DE)
(72) Erfinder:
(74) Vertreter: Hutzelmann, Gerhard

(57) **Zusammenfassung**

Verfahren zur Herstellung eines Verpackungsbehälters (1) mit einem Innenteil (2) und einem Aussenteil (3), wobei das Innenteil (2) ein schalen- oder becherförmiges Behältnis bildet und das Aussenteil (3) das Innenteil (2) wenigstens teilweise umschließt, wobei das Innenteil (2) aus einem formbaren, insbesondere thermoformbaren und/oder tiefziehbaren Material ein- oder mehrstückig hergestellt wird, wobei als Material vorzugsweise ein aus nachwachsenden und/oder biologisch abbaubaren Rohstoffen hergestelltes Material vorgesehen wird und daß das Aussenteil (3) wenigstens den Umfang des Innenteils (2) wenigstens teilweise umschließt und aus einem nachwachsenden, biologisch abbaubaren und/oder recyceltem Rohstoff hergestellt wird, wobei vorzugsweise faserhaltige Materialien vorgesehen werden können, sowie nach diesem Verfahren hergestellter Verpackungsbehälter.

## Beschreibung

Die Erfindung bezieht sich auf ein Verfahren zur Herstellung eines Verpackungsbehälters und einen nach diesem Verfahren hergestellten Verpackungsbehälter mit einem Innenteil und einem Aussenteil, wobei das Innenteil ein schalen- oder becherförmiges Behältnis bildet und das Aussenteil das Innenteil wenigstens teilweise umschließt.

Es sind verschiedene Verfahren zur Herstellung solcher Verpackungen bekannt, die jedoch entweder sehr aufwendig, sehr teuer oder nur ungenügende Ergebnisse liefern.

Die nach diesen Verfahren hergestellten Verpackungen genügen in der Regel nicht den Anforderungen nach einer kostengünstigen, leicht herstellbaren und dennoch robusten Verpackung.

Aufgabe der Erfindung ist es, diese Nachteile zu vermeiden und ein einfaches und kostengünstiges Verfahren zur Herstellung von Verpackungen nach dem Oberbegriff des Hauptanspruches vorzuschlagen, mit dem anspruchsvolle und hochwertige Verpackungen geschaffen werden.

Diese Aufgabe wird erfindungsgemäß dadurch gelöst, daß das Innenteil aus einem formbaren, insbesondere thermoformbaren und/oder tiefziehbaren Material ein- oder mehrstückig hergestellt wird, wobei als Material vorzugsweise ein aus nachwachsenden und/oder biologisch abbaubaren Rohstoffen hergestelltes Material vorgesehen wird und daß das Aussenteil wenigstens den Umfang des Innenteils wenigstens teilweise umschließt und aus einem nachwachsenden, biologisch abbaubaren und/oder recyceltem Rohstoff hergestellt wird, wobei vorzugsweise faserhaltige Materialien vorgesehen werden können.

Damit wird auf einfache Art und Weise eine sehr stabile, aber dennoch umweltfreundliche Verpackung geschaffen, die für die Verpackung von Lebensmitteln wie zum Beispiel Joghurt oder dergleichen bestens geeignet ist.

Sehr vorteilhaft ist es erfindungsgemäß auch, wenn das Innenteil in das Außenteil hinein tiefgezogen oder in dieses hinein geblasen wird, wobei das spätere Innenteil als flache Folie oder als Vorformling vorgesehen werden kann.

Damit wird das Innenteil sehr gut an das Außenteil angepasst. Zudem kann auf diese Art und Weise eine ausreichende Adhäsion geschaffen werden, die ein ungewolltes Trennen der beiden Teile verhindert. Zudem wird damit eine sehr stabile, aber dennoch umweltfreundliche Verpackung geschaffen, die für die Verpackung von Lebensmitteln wie zum Beispiel Joghurt oder dergleichen bestens geeignet ist.

Ebenfalls sehr vorteilhaft ist es erfindungsgemäß, wenn das Innenteil aus einem Polymer, insbesondere aus PS, PE, PP, PET, PVC, Stärkepolymeren, Polymilchsäure oder anderen natürlichen oder künstlichen Polymeren ein- oder mehrschichtig auch in Kombination mit Barriereschichtem, Lacken oder dergleichen geformt werden kann.

Diese Materialien sind lebensmittelgeeignet, aber dennoch sehr umweltfreundlich und wenigstens großteils recycelbar. Gegen einen direkten Lebensmittelkontakt zwischen diesen Materialien und dem Füllgut spricht nichts.

Eine weitere sehr vorteilhafte Ausgestaltung liegt auch vor, wenn das Innenteil aus einem faserhaltigen Werkstoff wie Moulded-Fiber aber auch Papier, Pappe, Karton gefertigt wird, wobei diese auch aus recycelten Materialien hergestellt sein können, und wenigstens auf der Innenseite mit einer Resistenz-Schicht gegenüber Flüssigkeiten, Fetten oder dergleichen ausgerüstet sein kann und wobei diese Werkstoffe tiefgezogen oder in eine Form eingebracht werden können.

Damit wird ein direkter Kontakt des Innenteils zum Füllgut vermieden, und trotzdem sichergestellt, daß das Innenteil aus äußerst umweltfreundlichen Materialien gefertigt sein kann. Die Resistenzschicht kann als Kunststoffbeschichtung oder dergleichen ausgebildet sein und sorgt dafür, daß einerseits das Füllgut vor unerwünschten Umwelteinflüssen geschützt ist und andererseits das Füllgut nicht in die fasrigen Bestandteile des Innenteils einzudringen vermag. Mit dieser Ausgestaltung wird nochmals der Kunststoff-Anteil der aus den beiden Teilen bestehenden Verpackung reduziert. Die Umweltbilanz wird dadurch verbessert.

Eine sehr vorteilhafte Fortbildung der Erfindung liegt auch vor, wenn das Aussenteil aus einem faserhaltigen Werkstoff wie Papier, Pappe, Karton, Moulded-Fiber und/oder Polymerfilmen oder Teilen hiervon gefertigt wird und um das Innenteil herumgelegt, über dieses gestülpt werden oder als Tiefziehform für das Innenteil dienen kann.

Dieses nicht direkt mit dem Füllgut in Kontakt kommende Außenteil stabilisert den Verpackungsbehälter und verleiht ihm eine solche Steifigkeit, daß der Behälter problemlos handhabbar ist. Zudem kann das Außenteil gleichzeitig als verlorene Form für das Innenteil dienen, wenn das Innenteil in das Außenteil hinein tiefgezogen oder in diesem geblasen oder auch in dieses hinein im Spritzgußverfahren geformt wird. Das Außenteil soll im wesentlichen einen biologisch abbaubaren und/oder recycelbaren Charakter aufweisen und muss dabei hauptsächlich Stabilität liefern. Eine Eignung für direkten Lebensmittelkontakt ist nicht notwendig. So kann das Außenteil aus vergleichsweise günstigen Rohstoffen gefertigt werden.

Eine ebenfalls sehr vorteilhafte Fortbildung der Erfindung liegt auch dann vor, wenn wenigstens eine Kante des Außenteils abgedichtet und/oder feuchtigkeits-, flüssigkeits- und/oder fettunempfmdlich ausgerüstet werden kann, wobei diese Abdichtung durch Beschichten, Abdecken und/oder Umfalten erzeugt werden kann.

Durch eine Abdichtung oder das Unempfmdlich-Machen gegen Flüssigkeit, Feuchtigkeit und/oder Fett wird das Außenteil vor Beschädigungen, Aufquellen oder dergleichen geschützt. Zudem wird verhindert, daß ein eventueller Aufdruck beschädigt oder unansehnlich wird. Die Abdichtung bzw. das Unempfmdlich-Machen kann durch eine Beschichtung oder Abdeckung erfolgen. Als Beschichtung ist beispielsweise ein Aufdruck, eine Imprägnierung oder eine Kunststoffbeschichtung denkbar. Ein Druckbild kann zugleich als Beschichtung dienen. An den Schnittkanten kann eine gesonderte Beschichtung oder Abdeckung angebracht werden. Es ist aber auch denkbar, daß die Schnittkanten nach hinten umgefaltet werden und so die offene Schnittkante vor Umwelteinflüssen geschützt wird.

Eine weitere sehr vorteilhafte Fortbildung der Erfindung liegt auch darin, daß das Außenteil mit dem Innenteil durch Kleben, Klemmen und/oder Rasten verbunden wird.

Dies sind alles Verbindungsmethoden, die sich vor allem dann als besonders geeignet erwiesen haben, wenn das Innenteil und das Außenteil nachträglich zusammengesetzt werden. Aber auch wenn das Innenteil in das Außenteil hinein geformt wird, sind diese Verbindungsmethoden einsetzbar.

Dabei hat es sich als sehr vorteilhaft erwiesen, wenn wenigstens ein Vorsprung am Innenteil vorgesehen wird, der in ein entsprechendes Gegenstück am Außenteil einzugreifen vermag.

Hiermit wird eine sehr haltbare Verrastung geschaffen, die allen Widrigkeiten bei der Handhabung und dem Transport der Verpackung zu widerstehen vermag.

Erfindungsgemäß ist es auch äußerst vorteilhaft, wenn wenigstens im Bereich des Überganges zwischen Boden und Seitenwand eine Verstärkungsrippe vorgesehen wird, die umlaufend ausgebildet werden kann.

Durch eine solche Rippe wird nicht nur die Aufstandsfläche der nach dem erfindungsgemäßen Verfahren geschaffenen Verpackung vergrößert, sondern auch die gesamte Struktur verstärkt und stabilisiert. Insbesondere wird die Struktursteifigkeit im Bodenbereich verbessert.

Dabei hat es sich als sehr vorteilhaft erwiesen, wenn die Verstärkungsrippe nach außen gerichtet ist und gleichzeitig als Rastnase für das Außenteil vorgesehen werden kann.

Diese Rippe dient als Verrastung und/oder Anschlag für das Außenteil und verhindert so ein versehentliches Abrutschen des Außenteils.

Eine weitere, ebenfalls sehr vorteilhafte Ausgestaltung der Erfindung liegt auch vor, wenn das Außenteil mit wenigstens einer Verstärkungsrippe ausgerüstet wird, die umlaufend ausgebildet werden kann.

Hierdurch wird die Strukturfestigkeit des Außenteils deutlich erhöht.

Äußerst vorteilhaft ist es erfindungsgemäß auch, wenn die Verstärkungsrippen von Innenteil und Außenteil aufeinander abgestimmt werden, sich aneinander abstützen und/oder gegeneinander verhaken können.

Durch das Zusammenwirken der Verstärkungsrippen von Innenteil und Außenteil wird nicht nur die Stabilität nochmals erhöht, sondern es werden auch die beiden Teile direkt aneinander befestigt.

Ein nach dem erfindungsgemäßen Verfahren hergestellter Verpackungsbehälter weist ebenfalls sehr vorteilhafte Merkmale auf, wenn wenigstens eine Entnahmeöffnung vorgesehen ist, die mit einem Deckel, einer Siegelfolie oder anderen Mitteln verschlossen sein kann.

Damit kann der Behälter sehr einfach verschlossen werden und weist aber die mit dem erfindungsgemäßen Verfahren geschaffenen Merkmale auf.

Äußerst vorteilhaft ist es, wenn der Verpackungsbehälter einen Boden und eine oder mehrere Seitenwände aufweist, wobei das Innenteil den Verpackungsbehälter bildet und das Außenteil die Seitenwände wenigstens teilweise umgreift.

Damit wird das Innenteil sehr gut gegen mechanische Beschädigungen geschützt. Vor allem wird ein versehentliches Durchstoßen des Innenteils verhindert. Dies bietet die Möglichkeit, die Materialstärke des Innenteils sehr stark zu reduzieren und trotzdem eine sehr gute Festigkeit und Stabilität des Bechers zu erreichen. Der Anteil an eventuell nur schwer wiederverwertbaren Materialien und/oder aus nativen Materialien herzustellenden Teilen wird verringert.

Ebenfalls sehr vorteilhaft ist es erfindungsgemäß, wenn das Außenteil den Boden des Innenteils wenigstens teilweise bedeckt.

Hiermit kann auch der Bodenbereich sehr stark reduziert werden. Prinzipiell ist es denkbar, daß das Innenteil eine solche Dickenreduzierung erfährt, daß dieses quasi nur noch aus einer dünnen Folie besteht. Die Stabilität wird durch das Außenteil sichergestellt.

Eine weitere sehr vorteilhafte Ausgestaltung der Erfindung liegt auch vor, wenn das Außenteil ausschließlich an den Seitenwänden des Innenteils angeordnet ist und einen Abstand zum Übergang zwischen Seitenwand und Boden aufweisen kann.

Damit wird sichergestellt, daß das Außenteil keine Feuchtigkeit von der Standfläche her aufnehmen kann.

Erfindungsgemäß hat es sich auch als sehr vorteilhaft erwiesen, wenn der Verpackungsbehälter wenigstens eine Mundrolle, einen Rand oder dergleichen aufweist, die als Siegelrand ausgebildet sein können.

An einer solchen Begrenzung der Entnahmeöffnung kann sehr leicht ein Deckel oder dergleichen angebracht werden. Wenn eine Mundrolle vorgesehen ist, kann die Verpackung auch sehr gut als Trinkbecher oder dergleichen genutzt werden. Der Einsatz zum Beispiel für Trinkyoghurt, Trinkmilch oder auch andere Füllstoffe ist dadurch gut denkbar.

Im folgenden wird die Erfindung anhand eines Ausführungsbeispiels veranschaulicht.

Dabei zeigen:
- Fig. 1: ein Schaubild eines erfindungsgemäßen Verpackungsbehälters mit einem Innenteil und einem Außenteil, wobei das Außenteil das Innenteil an seinem Umfang auf einem Teil der Höhe umschließt,
- Fig. 2: eine schematische Darstellung eines Außenteils, in das ein Innenteil tiefgezogen wird,
- Fig. 3.: eine schematische Darstellung eines Außenteils, in das ein Innenteil geblasen wird,
- Fig. 4: eine schematische Darstellung eines Innenteils um das ein Außenteil herumgelegt wird,
- Fig. 5: ein Schaubild eines weiteren Behälters bei dem das Außenteil in der Art einer Wellpappe ausgebildet ist,
- Fig. 6: ein Schaubild eines weiteren Behälters, bei dem das Außenteil das Innenteil sowohl an den Seiten als auch am Boden umschließt.

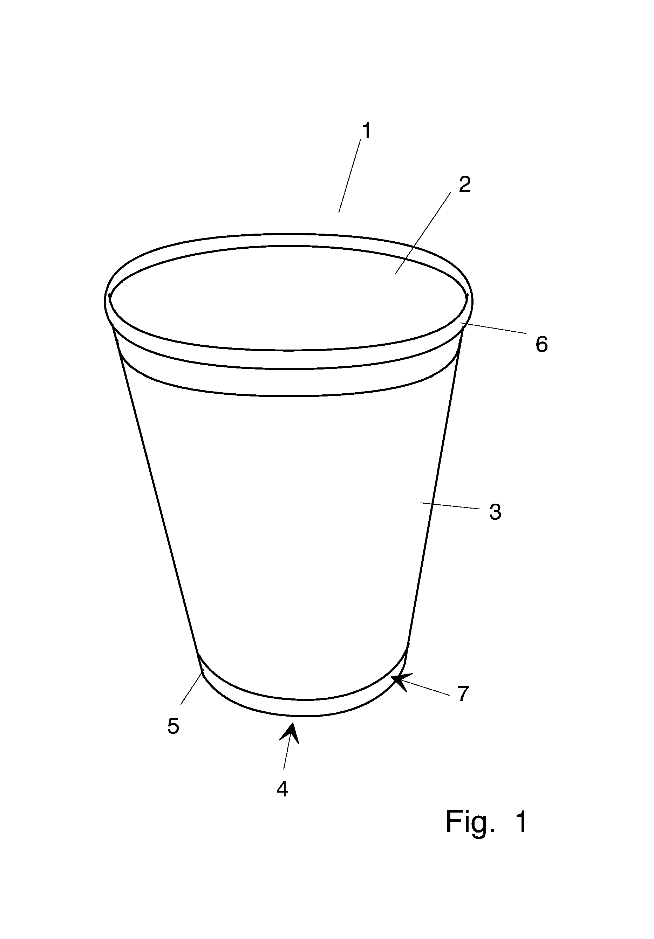

Mit 1 ist in Fig. 1 ein Becher bezeichnet, der ein Innenteil 2 und ein darum herum angeordnetes Außenteil 3 aufweist.

Das Innenteil 2 besteht dabei aus einem wenigstens annähernd runden Boden 4 und einer daran anschließenden, umlaufenden Seitenwand 5. Am vom Boden 4 abgewandten Ende der Seitenwand 5 ist ein nach außen stehender Siegelrand 6 vorgesehen.

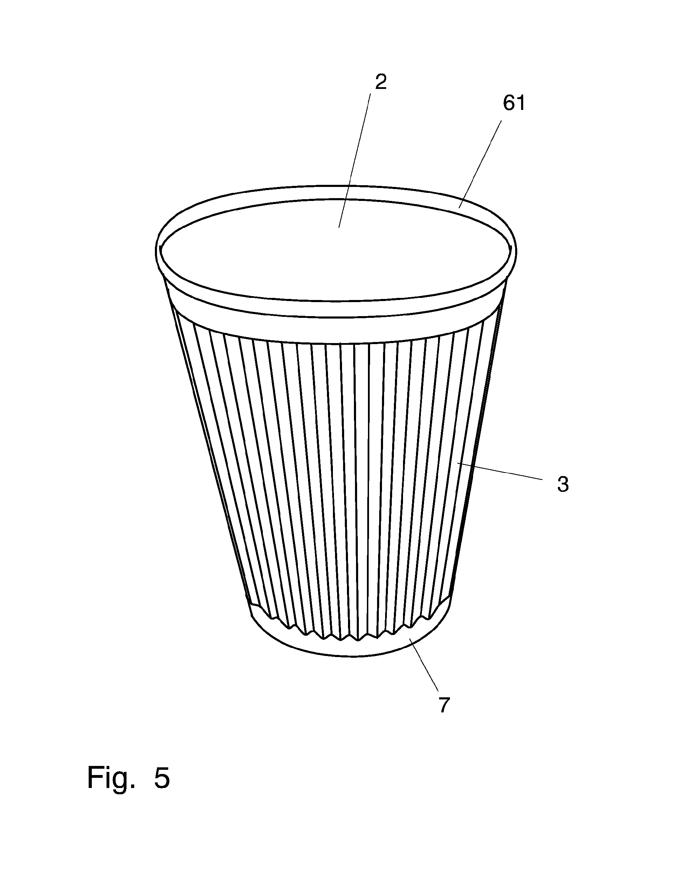

Es ist auch denkbar, daß anstelle des Siegelrandes 6 eine Verdickung oder eine Mundrolle 61 vorgesehen sein kann, wie dies in Fig. 5 dargestellt ist.

Sowohl auf die Verdickung als auch auf die Mundrolle 61 kann eine Deckelfolie aufgesiegelt sein. Es ist aber auch denkbar, daß ein Schnappdeckel vorgesehen ist, der sich am Siegelrand 6, an der Verdickung und/oder an der Mundrolle 61 abzustützen vermag und/oder hinter diese greift und sich so verriegelt.

Der Becher kann aus verschiedenen Materialien hergestellt sein, die jedoch gemäß der Erfindung vorzugsweise nachwachsend und/oder biologisch abbaubar sein sollen.

Hierfür sind Materialien wie PS, PE, PP, PET, PVC, aber auch Stärkepolymere, Polymilchsäure (PLA) oder andere Materialien ebenso denkbar, wie faserhaltige Materialien wie Papier, Pappe, Feinkarton oder dergleichen, die dann aber mit einer Resistenzschicht gegenüber dem Inhalt ausgerüstet sind.

Eine solche Resistenzschicht kann beispielsweise als Barriereschicht ausgebildet sein. Es sind aber auch Resistenzschichten denkbar, die wenigstens für eine definierte Zeitdauer Resistenzeigenschaften gegenüber dem Füllgut aufweisen. So kann beispielsweise ein beschichtetes oder imprägniertes Papier eingesetzt werden.

Als Beschichtung sind Kunststoffbeschichtungen ebenso denkbar, wie behandelte oder unbehandelte Papierlagen zum Beispiel aus Pergament, Pergamin, Pergament-Ersatz und/oder Pergaminersatz oder anderen die gewünschten Eigenschaften aufweisenden Papiere. Moulded-Fiber ist insbesondere denkbar, wenn die Oberfläche glatt ausgeführt ist.

Imprägnierungen beispielsweise auf Fettbasis sind auch denkbar.

In diesem Zusammenhang können auch mehrlagige Innenteile eingesetzt werden. Diese können einerseits eine oder mehrere Barriere- bzw. Resistenzschichten aufweisen, aber auch eine oder mehrere Tragschichten.

Als Barriereschichten sind beispielsweise auch EVOH, PA oder andere gebräuchliche Materialien mit Barriereeigenschaften denkbar. Diese können dann aber auch in extrem dünnen Schichten im Material des Innenteils 2 vorgesehen sein.

Es ist aber auch denkbar, daß diese gewickelt werden oder anderweitig auch aus mehreren Stücken zusammengesetzt werden. Es ist in diesem Zusammenhang auch denkbar, daß anstatt eines Bechers 1 im klassischen Sinn mit einem runden Boden 4 auch ein eckiges Behältnis geschaffen wird. Gerade dann kann der Becher 1 mehrteilig ausgebildet sein.

Insgesamt ist das Innenteil 2 erfindungsgemäß weich bzw. wenig steif ausgebildet. Dies kann einerseits eine Folge aus der Materialauswahl sein und andererseits eine Folge einer sehr geringen Wandstärke des Innenteils 2.

Ziel der Erfindung ist es, möglichst wenig nicht oder schlecht biologisch abbaubare und/oder nachwachsende Rohstoffe einzusetzen, aber dennoch den bekannten Komfort und die gewünschte Stabilität der Behälter zu erzeugen.

Deswegen werden die Wandstärken des Innenteils 2 reduziert und zusätzlich noch wenigstens weitgehend aus nachwachsenden und/oder biologisch abbaubaren Rohstoffen hergestellt.

Solche Rohstoffe sind jedoch sehr teuer, da diese besondere Eigenschaften vor allem im Hinblick auf Lebensmittelverträglichkeit und/oder Barriereeigenschaften aufweisen müssen. Dies ist damit ein weiterer Grund, diese Materialien möglichst sparsam einzusetzen.

Die Stabilität und Festigkeit des Innenteils 2 kann auch konstruktiv erhöht sein, indem beispielsweise am unteren Rand des Innenteils 2 ein nach außen ragender, als Wulst 7 ausgebildeter Rand angeordnet ist. Dieser Wulst 7 verstärkt einerseits den meist stark belasteten Übergang zwischen Boden 4 und Seitenwand 5 und kann zusätzlich noch für eine bessere Standfestigkeit sorgen. Durch den Wulst 7 wird nicht nur die Aufstandsfläche des Innenteils 2 vergrößert, sondern auch der Schwerpunkt des Innenteils 2 nach unten verschoben.

Der Wulst 7 kann desweiteren noch als Stapelhilfe dienen, wenn mehrere Innenteile 2 oder auch komplette Becher 1 ineinander gestapelt werden, was oftmals zum Transport leerer Becher gemacht wird.

Dabei stützt sich der Wulst 7 an der Innenseite des darunterliegenden Innenteils 2 ab und sorgt so dafür, daß die Kontaktfläche zwischen den ineinander gestapelten Bechern 1 reduziert wird.

Zusätzlich kann der Wulst 7 nicht nur umlaufend ausgebildet sein, sondern auch segmentförmig, wodurch auch noch der Zutritt von Luft beim Entstapeln der Becher 1 erleichtert wird. Bei einer segmentförmigen Ausgestaltung des Wulstes 7 muss dieser am Ende eines Segmentes nicht vollständig zurücktreten, sondern es ist auch denkbar, daß nur die Dicke des Wulstes 7 variiert.

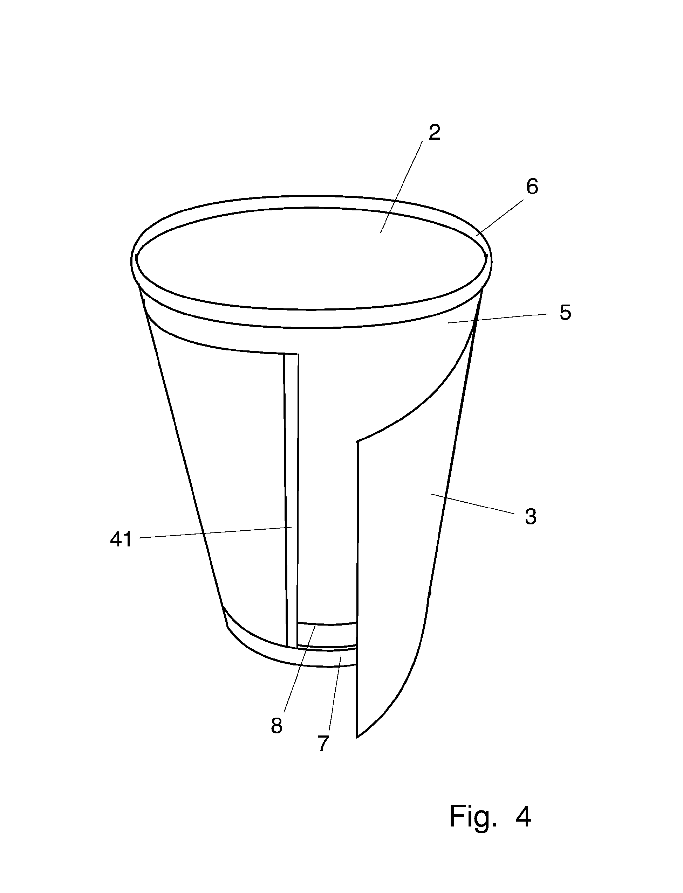

Der Wulst 7 kann auch mit einer in Fig. 4 angedeuteten Stapelkante 8 in Wechselwirkung treten, die beispielsweise als nach innen ragende Schulter im Innenteil 2 angebracht und wenigstens geringfügig oberhalb des Wulstes 7 angeordnet sein kann. Als Abstand vom Boden 4 zur Stapelkante 8 werden oftmals zwischen fünf und zehn Millimeter eingestellt.

Auch diese Stapelkante 8 verstärkt das Innenteil 2 konstruktiv.

Weitere Verstärkungsrippen sind denkbar.

Das Außenteil 3 umschließt im in Fig. 1 dargestellten Ausführungsbeispiel die Seitenwand 5 des Innenteils 2 umlaufend und bedeckt dabei einen Großteil der Höhe des Innenteils 2.

Nur am unteren Ende ist das Innenteil 2 nicht bedeckt. Der Abstand des Außenteils 3 vom Boden des Innenteils 2 beträgt dabei meist zwischen ein und fünf Millimeter.

Das Außenteil 3 ist dabei durch Kleben, Siegeln, Rasten oder dergleichen am Innenteil 2 befestigt.

Eine Verrastung kann beispielsweise dadurch erfolgen, daß das Außenteil 3 sich am Wulst 7 abstützt. Andere umlaufende oder abschnittsweise Rastmittel wie Vorsprünge oder Rippen sind denkbar. Ebenso ist es denkbar, daß nicht nur das Innenteil 2 Verstärkungsrippen oder dergleichen aufweist, sondern auch das Außenteil 3. Diese Verstärkungsrippen sollten dann aufeinander abgestimmt sein, so daß diese ineinander oder hintereinander greifen können und so eine Verrastung erzeugt wird.

Das Außenteil 3 stabilisiert und festigt die Seitenwand 5 des Innenteils 2.

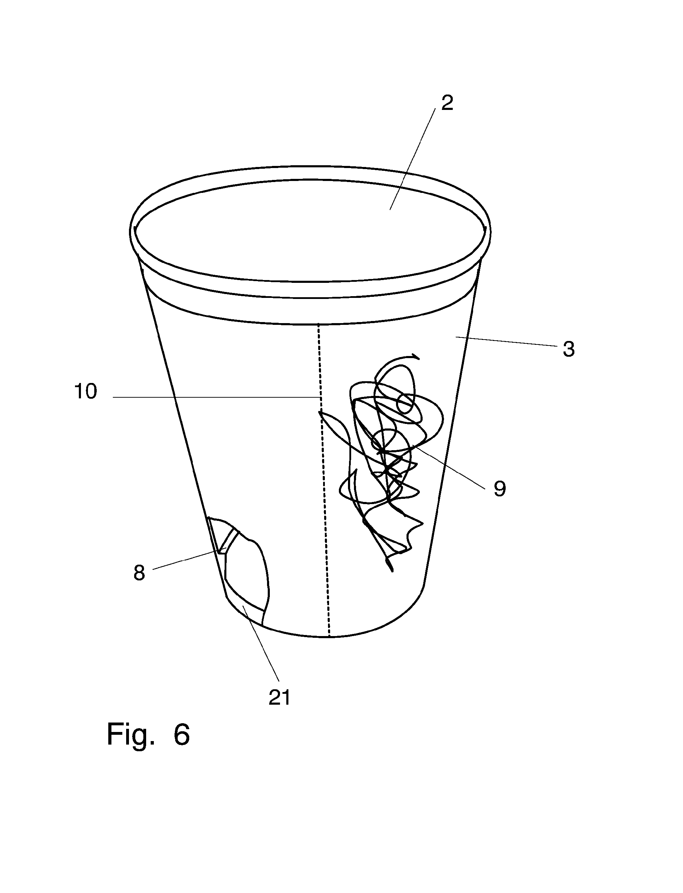

Bei anderen Ausgestaltungen, wie beispielsweise in Fig. 6 dargestellt, kann das Außenteil 3 das Innenteil 2 auch im Bodenbereich umschließen und weist selbst einen Boden 21 auf.

Das Außenteil 3 wird im allgemeinen aus Papier, Pappe, Karton oder anderen Materialien hergestellt und kann auch aus Recyclingmaterialien bestehen. Dabei kann das Außenteil 3 auch mehrlagig ausgebildet sein. Das Außenteil 3 ist vergleichsweise unkritisch in Bezug auf Lebensmitteltauglichkeit, da das Füllgut nicht mit dem Außenteil in Kontakt kommt.

Auf der Außenseite des Außenteils 3 kann ein Druckbild 9 vorgesehen werden. Um ein hochwertiges Druckbild 9 zu erhalten, kann die Außenseite mit einem besonders glatten und gut bedruckbaren Material beschichtet sein. Es sind hier Feinpapiere ebenso denkbar, wie entsprechend ausgerüstete Kunststoffe. In diesem Zusammenhang ist es auch denkbar, daß ein Unterlack unter dem eigentlichen Druckbild vorgesehen ist.

Um Abrieb der Druckfarben und/oder eine Beschädigung des Druckbildes zu vermeiden kann auch ein Überlack oder eine Schutzbeschichtung vorgesehen sein.

Das Außenteil 3 kann auch aus gewellten Materialien wie beispielsweise Wellpappe oder dergleichen gefertigt sein, die dann für eine sehr gute Isolierung des Bechers 1 dienen können oder wenigstens besonders angenehme taktile Eigenschaften aufweisen.

Eine Isolierung kann auch beispielsweise durch eine geschäumte Beschichtung zum Beispiel auf Basis von Stärkepolymeren geschaffen werden.

Isolierte Becher 1 eignen sich besonders für kalte oder heiße Füllgüter.

Das Außenteil 3 kann wenigstens partiell auch mit einer Schutzbeschichtung ausgerüstet sein, die diese unempfindlich gegenüber Feuchtigkeit, Flüssigkeit aber auch Fetten machen kann.

Gerade an den unteren und oberen Rändern des Außenteils 3 besteht die Gefahr, daß dort Feuchtigkeit, Flüssigkeit oder auch Fette eindringen können, da dort meistens offene Schnittkanten vorliegen.

Gerade in diesen Bereichen kann die Schutzbeschichtung vorgesehen sein. Es ist aber auch denkbar, daß die Kanten des Außenteils 3 nach innen umgefaltet sind und so die Schnittkanten geschützt werden und so das Eindringen von Feuchtigkeit, Flüssigkeit oder dergleichen vermieden wird.

In diesem Zusammenhang ist es auch denkbar, daß das Außenteil 3 durch eine entsprechende Ausrüstung wenigstens für eine definierte Zeitdauer Resistenzeigenschaften gegenüber diesen Stoffen aufweist. Dies kann beispielsweise auch durch eine Imprägnierung oder eine enstprechende Materialauswahl sichergestellt werden.

Auch ist es denkbar, daß diese Resistenzeigenschaften durch eine Bedruckung erzeugt werden.

Das Außenteil 3 kann eine Sollbruchstelle 10 aufweisen, an der sich das Außenteil 3 öffnen und vom Innenteil 2 trennen lässt.

Innenteil 2 und Außenteil 3 können dann sogar getrennt voneinander der Entsorgung zugeführt werden, obwohl dies bei einer erfindungsgemäßen Stoffauswahl nicht mehr erforderlich ist.

Anstatt eines Bechers 1 im klassischen Sinn mit einem runden Boden 4 kann auch ein eckiges Behältnis geschaffen wird.

Der Becher 1 kann auf verschiedene Arten hergestellt werden.

Es ist einerseits denkbar, daß das Innenteil 2 klassisch in eine Tiefziehform tiefgezogen, oder aber aus einem Vorformling geblasen wird.

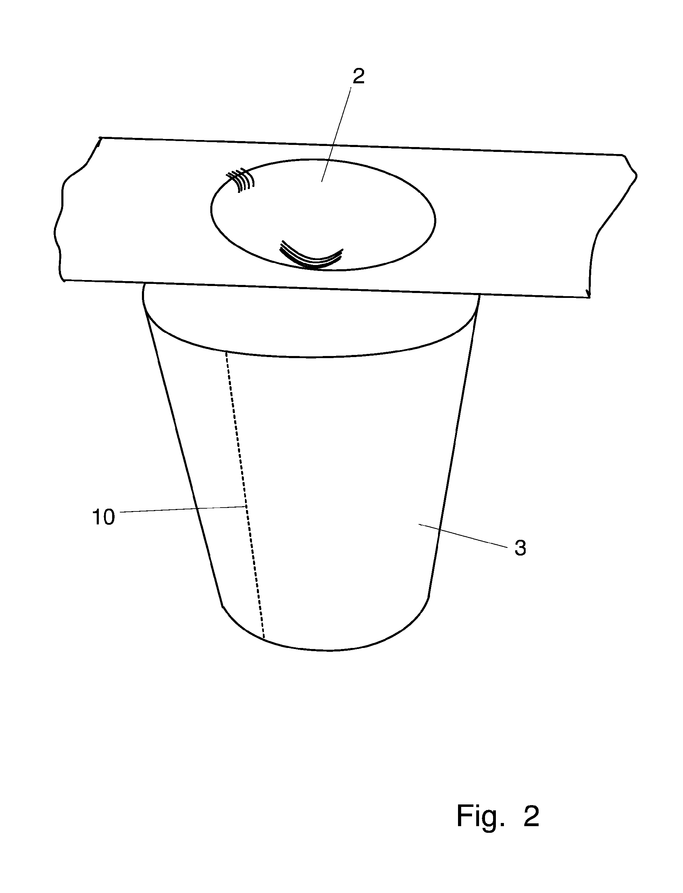

Wie in Fig. 2 angedeutet, kann dabei das Innenteil 2 direkt in das Außenteil 3 hinein tiefgezogen werden.

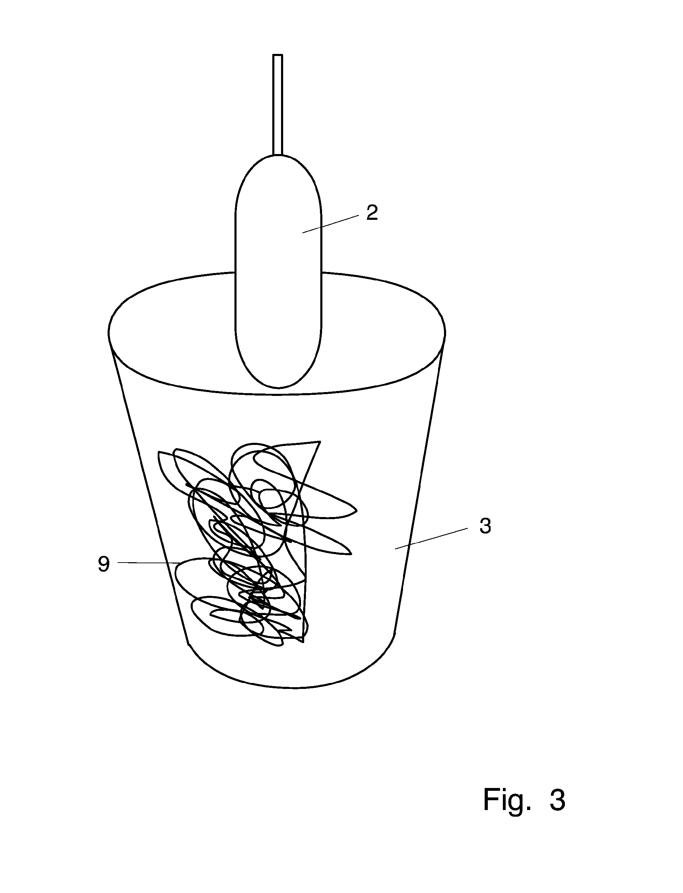

Ebenso kann das Innenteil 2 in das Außenteil 3 hinein geblasen werden, wie in Fig.3 angedeutet.

In beiden Fällen erübrigt sich in den allermeisten Fällen eine zusätzliche Befestigung des Innenteils 2 am Außenteil 3, da alleine durch den weichen Kunststoff beim Tiefziehen bzw. Blasen eine sehr gute Haftung zwischen den beiden Teilen entsteht.

Zusätzlich kann auch eine Verrastung oder dergleichen vorgesehen werden. Es ist beispielsweise denkbar, daß wie oben ausgeführt, Ausnehmungen im Außenteil 3 vorgesehen werden, in die hinein das Innenteil geformt wird und so eine sehr stabile Verrastung erzeugt werden kann. Ebenso ist es denkbar, daß die Verrastung in umgekehrter Richtung ausgebildet ist. Dies bedeutet, daß nach innen ragende Erhebungen am Außenteil 3 vorgesehen werden, um die sich das Innenteil 2 beim Formen herumlegt und so eine mechanische Verbindung zwischen den beiden Teilen geschaffen wird.

Es ist aber auch denkbar, daß gemäß einer weiteren Ausgestaltung der Erfindung die beiden Teile getrennt gefertigt und erst anschließend zusammengefügt werden.

Es ist dabei denkbar, daß das Außenteil 3 um das Innenteil 2 herumgelegt und an einer Seitennaht 41 in sich verklebt wird.

Um das Außenteil 3 am Innenteil 2 zu befestigen und ein ungewolltes Abrutschen zu vermeiden kann entweder eine Verrastung, ein Wulst 7 oder dergleichen vorgesehen werden. Das Außenteil 3 vermag sich an diesen Erhebungen abzustützen.

Zusätzlich oder anstatt einer solchen mechanischen Verbindung kann auch eine Klebung oder Verschweißung zwischen Innenteil 2 und Außenteil 3 vorgesehen werden.

In diesem Zusammenhang ist es auch denkbar, daß das Außenteil 3 fertig zu einem Mantel geformt, an der Seite in sich verbunden und dann über das Innenteil 2 geschoben und mit diesem verrastet wird.

Es sind auch mehrere Rippen, Erhebungen oder andere mechanisch wirkende Vorrichtungen denkbar, die sowohl am Innenteil 2 als auch am Außenteil 3 angeordnet sind und sich aneinander oder am jeweils anderen Teil abzustützen vermögen.

## Patentansprüche

1. Verfahren zur Herstellung eines Verpackungsbehälters mit einem Innenteil und einem Aussenteil, wobei das Innenteil ein schalen- oder becherförmiges Behältnis bildet und das Aussenteil das Innenteil wenigstens teilweise umschließt, **dadurch gekennzeichnet, daß** das Innenteil aus einem formbaren, insbesondere thermoformbaren und/oder tiefziehbaren Material ein- oder mehrstückig hergestellt wird, wobei als Material vorzugsweise ein aus nachwachsenden und/oder biologisch abbaubaren Rohstoffen hergestelltes Material vorgesehen wird und daß das Aussenteil wenigstens den Umfang des Innenteils wenigstens teilweise umschließt und aus einem nachwachsenden, biologisch abbaubaren und/oder recyceltem Rohstoff hergestellt wird, wobei vorzugsweise faserhaltige Materialien vorgesehen werden können.

2. Verfahren nach Anspruch 1, **dadurch gekennzeichnet, daß** das Innenteil in das Außenteil hinein tiefgezogen oder in dieses hinein geblasen wird, wobei das spätere Innenteil als flache Folie oder als Vorformling vorgesehen werden kann.

3. Verfahren nach Anspruch 1 oder 2, **dadurch gekennzeichnet, daß** das Innenteil aus einem Polymer, insbesondere aus PS, PE, PP, PET, PVC, Stärkepolymeren, Polymilchsäure oder anderen natürlichen oder künstlichen Polymeren ein- oder mehrschichtig auch in Kombination mit Barriereschichten, Lacken oder dergleichen geformt werden kann.

4. Verfahren nach Anspruch 1, 2 oder 3, **dadurch gekennzeichnet, daß** das Innenteil aus einem faserhaltigen Werkstoff wie Moulded-Fiber aber auch Papier, Pappe, Karton gefertigt wird, wobei diese auch aus recycelten Materialien hergestellt sein können, und wenigstens auf der Innenseite mit einer Resistenz-Schicht gegenüber Flüssigkeiten, Fetten oder dergleichen ausgerüstet sein kann und wobei diese Werkstoffe tiefgezogen oder in eine Form eingebracht werden können.

5. Verfahren nach nach einem der Ansprüche 1 bis 4, **dadurch gekennzeichnet, daß** das Aussenteil aus einem faserhaltigen Werkstoff wie Papier, Pappe, Karton, Moulded-Fiber und/oder Polymerfilmen oder Teilen gefertigt wird und um das Innenteil herumgelegt, über dieses gestülpt werden oder als Tiefziehform für das Innenteil dienen kann.

6. Verfahren nach einem der vorangehenden Ansprüche, **dadurch gekennzeichnet, daß** wenigstens eine Kante des Außenteils abgedichtet und/oder feuchtigkeits-, flüssigkeits- und/oder fettunempfindlich ausgerüstet werden kann, wobei diese Abdichtung durch Beschichten, Abdecken und/oder Umfalten erzeugt werden kann.

7. Verfahren nach einem der vorangehenden Ansprüche, **dadurch gekennzeichnet, daß** das Außenteil mit dem Innenteil durch Kleben, Klemmen und/oder Rasten verbunden wird.

8. Verfahren nach Anspruch 7, **dadurch gekennzeichnet, daß** wenigstens ein Vorsprung am Innenteil vorgesehen wird, der in ein entsprechendes Gegenstück am Außenteil einzugreifen vermag.

9. Verfahren nach einem der vorangehenden Ansprüche, **dadurch gekennzeichnet, daß** wenigstens im Bereich des Überganges zwischen Boden und Seitenwand eine Verstärkungsrippe vorgesehen wird, die umlaufend ausgebildet werden kann.

10. Verfahren nach Anspruch 9, **dadurch gekennzeichnet, daß** die Verstärkungsrippe nach außen gerichtet ist und gleichzeitig als Rastnase für das Außenteil vorgesehen werden kann.

11. Verfahren nach einem der vorangehenden Ansprüche, **dadurch gekennzeichnet, daß** das Außenteil mit wenigstens einer Verstärkungsrippe ausgerüstet wird, die umlaufend ausgebildet werden kann.

12. Verfahren nach einem der vorangehenden Ansprüche, **dadurch gekennzeichnet, daß** die Verstärkungsrippen von Innenteil und Außenteil aufeinander abgestimmt werden, sich aneinander abstützen und/oder gegeneinander verhaken können.

13. Verpackungsbehälter hergestellt nach einem Verfahren nach einem der vorangehenden Ansprüche, **dadurch gekennzeichnet, daß** wenigstens eine Entnahmeöffnung vorgesehen ist, die mit einem Deckel, einer Siegelfolie oder anderen Mitteln verschlossen sein kann.

14. Verpackungsbehälter nach Anspruch 13, **dadurch gekennzeichnet, daß** der Verpackungsbehälter einen Boden und eine oder mehrere Seitenwände aufweist, wobei das Innenteil den Verpackungsbehälter bildet und das Außenteil die Seitenwände wenigstens teilweise umgreift.

15. Verpackungsbehälter nach Anspruch 13 oder 14, **dadurch gekennzeichnet, daß** das Außenteil den Boden des Innenteils wenigstens teilweise bedeckt.

16. Verpackungsbehälter nach einem der Ansprüche 13 bis 15, **dadurch gekennzeichnet, daß** das Außenteil ausschließlich an den Seitenwänden des Innenteils angeordnet ist und einen Abstand zum Übergang zwischen Seitenwand und Boden aufweisen kann.

17. Verpackungsbehälter nach einem der Ansprüche 13 bis 16, **dadurch gekennzeichnet, daß** der Verpackungsbehälter wenigstens eine Mundrolle, einen Rand oder dergleichen aufweist, die als Siegelrand ausgebildet sein können.
